Europäisches Patentamt

**European Patent Office**

**Office européen des brevets**

(11) Veröffentlichungsnummer: **0 309 833**
**A1**

(12) **EUROPÄISCHE PATENTANMELDUNG**

(21) Anmeldenummer: 88115225.0

(22) Anmeldetag: 16.09.88

(51) Int. Cl.⁴: **H01S 3/03 , H01J 61/02**

Die Bezeichnung der Erfindung wurde geändert (Richtlinien für die Prüfung im EPA, A-III, 7.3).

(30) Priorität: 28.09.87 DE 3732637

(43) Veröffentlichungstag der Anmeldung:
**05.04.89 Patentblatt 89/14**

(84) Benannte Vertragsstaaten:
**BE DE ES FR GB IT**

(71) Anmelder: **Siemens Aktiengesellschaft Berlin und München**
**Wittelsbacherplatz 2**
**D-8000 München 2(DE)**

(72) Erfinder: **Krüger, Hans**
**Peralohstrasse 13**
**D-8000 München 83(DE)**
Erfinder: **Lamprecht, Herbert, Dr.**

**Vestorben(DE)**
Erfinder: **Tiemann, Wilhelm**
**Fasanenweg 11**
**D-8526 Bubenreuth(DE)**

(54) **Gaslaser-Anordnung mit einer Entladungsröhre.**

(57) Eine Gaslaser-Anordnung, insbesondere Argon-Ionenlaser, enthält eine Entladungsröhre, die zwischen einer Kathode und einer Anode angeordnet ist und die mit einem zentralen Entladungskanal und wenigstens einem Gasrückführungskanal versehen ist. Erfindungsgemäß ist der Kathode (4) eine Hilfselektrode (14) für eine Vorentladung zugeordnet, die über einen Widerstand (15) mit einer Betriebsspannungsquelle (16) verbunden ist. In dieser Ausführungsform des Gaslasers wird die Zündung der Gasentladung durch den zentralen Entladungskanal (7) wesentlich erleichtert und Fehlzündungen durch die Gasrückführungskanäle (8) sind somit praktisch ausgeschlossen.

FIG 3

EP 0 309 833 A1

## Gaslaser-Anordnung

Die Erfindung bezieht sich auf eine Gaslaser-Anordnung mit einer Entladungsröhre, die zwischen einer Kathode und einer Anode angeordnet ist und die mit einem Entladungskanal und wenigstens einem Gasrückführungskanal versehen ist.

Gaslaser, insbesondere Argon-Ionenlaser, mit einer Ausgangsleistung bis zu mehreren Watt im sichtbaren Bereich sind bekanntlich als Lichtquellen für wissenschaftliche und industrielle Anwendungen, beispielsweise für die Spektroskopie, Holographie und zerstörungsfreie Werkstoffprüfung sowie zur Augen- und Hautchirurgie, geeignet. Zwischen einer Kathode und einer Anode wird im Entladungskanal einer Entladungsröhre, die aus elektrisch isolierendem Material, beispielsweise Keramik wie Berylliumoxid BeO, Aluminiumnitrid AlN oder Aluminiumoxid $Al_2O_3$ oder auch aus einer Metallscheiben-Isolierstoff-Kaskade bestehen kann, eine Gasentladung gezündet. Der Gasentladungskanal besteht aus einer Kapillarbohrung, deren Durchmesser im allgemeinen 2 mm nicht wesentlich überschreitet. Zum Druckausgleich ist eine Gasrückführung vorgesehen, die aus einem externen oder internen Verbindungskanal zwischen dem Anodenraum und dem Kathodenraum besteht.

In einer bekannten Ausführungsform für verhältnismäßig geringe Leistung kann als Entladungsröhre beispielsweise ein Keramikrohr vorgesehen sein, das zur Wärmeabführung mit metallischen Kühlrippen versehen ist. In einer sogenannten Stapelbauweise kann die Entladungsröhre auch aus Keramikringen und metallischen Kühlscheiben bestehen, die jeweils mit einer zentralen Bohrung versehen sind und derart abwechselnd aufeinandergestapelt sind, daß ihre koaxialen Bohrungen den Entladungskanal bilden. Zum Druckausgleich ist eine Gasrückführung vorgesehen, die aus einer Rohrverbindung zwischen dem Anodenraum und dem Kathodenraum besteht. In einer besonderen Ausführungsform erhält man eine interne Gasrückführung dadurch, daß wenigstens ein Gasrückführungskanal parallel zum Entladungskanal in der Entladungsröhre angeordnet ist (US-Patent 3 753 144).

In einer weiteren Ausführungsform eines Gaslasers für höhere Leistung mit einer Flüssigkeitskühlung kann der Kathodenraum und der Entladungskanal und der Anodenraum von einer gemeinsamen Entladungsröhre mit einer verhältnismäßig dünnen Wandung aus Keramik umgeben sein. Der Entladungskanal wird gebildet aus einer größeren Anzahl von topfförmigen Metallelementen, die jeweils mit einer zentralen Bohrung versehen sind und in der Entladungsröhre hintereinander angeordnet sind. Die Bohrungen sind von zentralen hohlzylindrischen Ansätzen umgeben, die gemeinsam den zentralen Entladungskanal bilden. In ihrem äußeren Randbereich sind die Metallelemente mit der Innenwand der Entladungsröhre verlötet. Ein Teil des Bodens der Metallelemente in der Umgebung der Bohrung besteht im allgemeinen aus einem sputterresistenten Material, beispielsweise Wolfram. Zur Gasrückführung sind die Topf-Elemente in ihrem Randbereich mit Bohrungen versehen (US-Patent 4 378 600).

Der Erfindung liegt die Aufgabe zugrunde, das Zündverhalten von Gaslasern, insbesondere von Argon- oder Kryptonionenlasern, zu verbessern, insbesondere sollen Fehlzündungen durch die Gasrückführungskanäle oder das Versagen der Zündung weitgehend vermieden werden. Die Lebensdauer der Gaslaser-Anordnung soll somit nicht durch Zündprobleme begrenzt sein.

Die Erfindung beruht nun auf der Erkenntnis, daß in der verhältnismäßig engen und langen Bohrung des Entladungskanals in der Aufbauphase der Entladung Ladungsträger durch Wandstöße verloren gehen können. Dadurch wird die Zündung der sich auf bauenden Entladung erschwert. Insbesondere kann sich nach langer Betriebsdauer der Gaslaser-Anordnung der Entladungskanal unter dem Einfluß des Lichtbogens verändern, beispielsweise kann die Wandung der Bohrung durch Ionen-Sputtervorgänge erodieren oder es können sich auf ihr Verunreinigungszonen bilden, die wenigstens teilweise aus Metallisierungen bestehen können. Diese Vorgänge können dazu führen, daß die Entladung nicht mehr zündet oder daß Fehlzündungen durch die Gasrückführungskanäle hindurch auftreten. Dazu kann nach langer Betriebsdauer auch eine Alterung der Kathode sowie eine mögliche Gaskontamination beitragen.

Die Lösung der genannten Aufgabe erfolgt nun erfindungsgemäß mit den Gestaltungsmerkmalen des Anspruchs 1. Mit der Hilfselektrode für eine Glimm-Vorentladung wird im Kathodenraum vor dem Durchschlag der Hauptentladung durch den Entladungskanal eine erhöhte, räumlich ausgedehnte Vorionisierung erzeugt. In einer besonders einfachen Ausführungsform der Erfindung kann als Hilfselektrode auch ein metallischer Teil des Kathodengehäuses, beispielsweise ein Metallflansch, vorgesehen sein. Eine getrennte Hilfsspannungsquelle ist nicht erforderlich, wenn die Hilfselektrode über den Widerstand, insbesondere einen hochohmigen Widerstand, mit der Anode verbunden und somit das Anodenpotential als Betriebsspannungsquelle der Vorentladung verwendet wird.

Zur weiteren Erläuterung der Erfindung wird auf die Zeichnung Bezug genommen, in deren Figur 1 eine Gaslaser-Anordnung gemäß der Erfindung mit einer besonderen Hilfselektrode im Kathodenraum schematisch veranschaulicht ist. In Figur 2 ist eine vereinfachte Ausführungsform mit dem Anodenpotential als Betriebsspannungsquelle der Vorentladung dargestellt. Figur 3 zeigt die Verwendung eines metallischen Teils des Kathodengehäuses als Hilfselektrode.

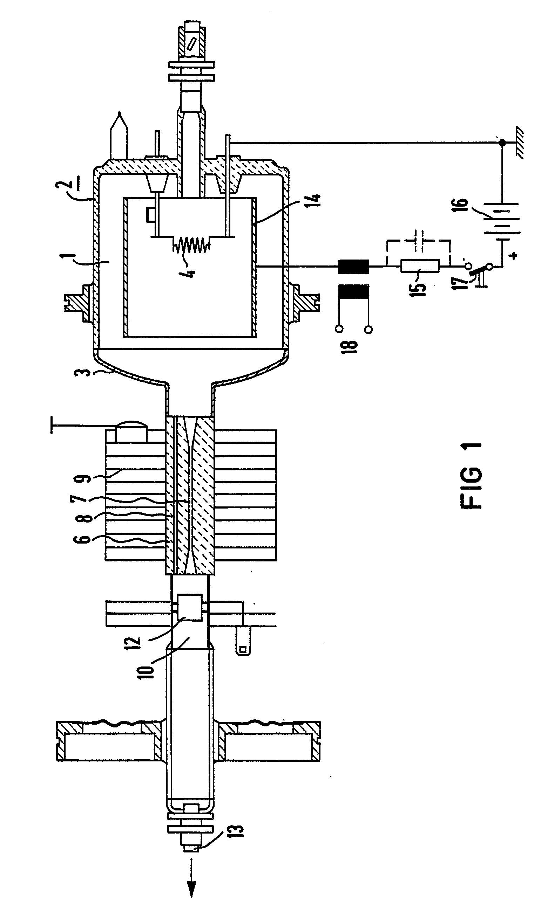

In der Ausführungsform gemäß Figur 1 ist ein Kathodenraum 1 von einem Kathodengehäuse 2 umgeben, das teilweise aus Glas oder Keramik besteht und mit einem metallischen Flansch 3 versehen ist. Der Kathodenraum 1 enthält eine Kathode 4, die als Heizwendel ausgeführt sein kann. Der Flansch 3 ist mit einer Entladungsröhre 6 verbunden, die vorzugsweise aus Keramik, beispielsweise Berylliumoxid BeO, Aluminiumoxid $Al_2O_3$ oder auch Aluminiumnitrid AlN, bestehen kann und mit einer zentralen Bohrung versehen ist, die als Entladungskanal 7 dient. Die Entladungsröhre 6 ist mit wenigstens einem, vorzugsweise mehreren Gasrückführungskanälen versehen, von denen in der Figur nur einer dargestellt und mit 8 bezeichnet ist. Zur Wärmeabführung kann die Entladungsröhre 6 noch mit metallischen Kühlrippen 9 versehen sein. Ein Anodenraum 10 enthält eine Anode 12, die von einem metallischen Anodengehäuse umgeben ist und zur Wärmeabführung ebenfalls mit nicht näher bezeichneten Kühlrippen versehen sein kann.

Gemäß der Erfindung ist im Kathodenraum 1 eine Hilfselektrode 14 für eine Vorentladung vorgesehen, die über eine Zündspannungsquelle 18 und einen hochohmigen Widerstand 15 von beispielsweise etwa 5 Megohm sowie eine Betriebsspannungsquelle 16 von beispielsweise etwa 200 bis 400 V mit der Kathode 4 verbunden ist. Nach der üblichen Vorwärmung der Kathode 4 auf ihre Betriebstemperatur von beispielsweise etwa 1050°C wird mit Hilfe eines Zündimpulses vom Zündtransformator 18 zwischen der Hilfselektrode 14 und der Kathode 4 eine stromschwache Glimmentladung gezündet. Diese Vorentladung erzeugt eine verstärkte und räumlich ausgedehnte Vorionisierung im Kathodenraum 1. Dadurch wird die Zündung der Hauptentladung durch den Entladungskanal 7 zur Anode 12 hin wesentlich erleichtert. Nach der Zündung der Hauptentladung fließt ein Plasmastrom hauptsächlich von der Heizwendel der Kathode 4 zur Anode 12, während der schwache Glimmstrom zur Hilfselektrode 14 praktisch zu vernachlässigen ist. Die Hilfselektrode 14 kann gegebenenfalls nach dem Einsetzen der Hauptentladung mit einem Schalter 17 wieder ausgeschaltet werden.

Zur Zündung der Hauptentladung wird von einer in der Figur nicht dargestellten Zündspannungsquelle kurzzeitig ein Zündspannungsimpuls, beispielsweise etwa 2 bis 5 kV, an die Anode 12 gelegt und damit eine Lichtbogenentladung eingeleitet, die mit einem Plasmastrom von einigen Ampere bis zu einigen 10 Ampere von der Kathode 4 durch den engen Entladungskanal 7 der Entladungsröhre 6 zur Anode 12 hindurchbrennt. Die Gasrückführungskanäle 8 dienen dazu, den Druck zwischen Kathodenraum 1 und Anodenraum 10 auszugleichen. Durch die Lichtbogenentladung hoher Stromdichte in der Entladungsröhre 7 wird das Füllgas, beispielsweise ein Edelgas oder eine Gasmischung, vorzugsweise Argon oder Krypton, mit einem Druck von etwa 1 Torr zur Laseraktivität angeregt. Der erzeugte Laserstrahl verläßt das System durch einen Auskoppel-Spiegel 13, wie es in der Figur durch einen nicht näher bezeichneten Pfeil angedeutet ist.

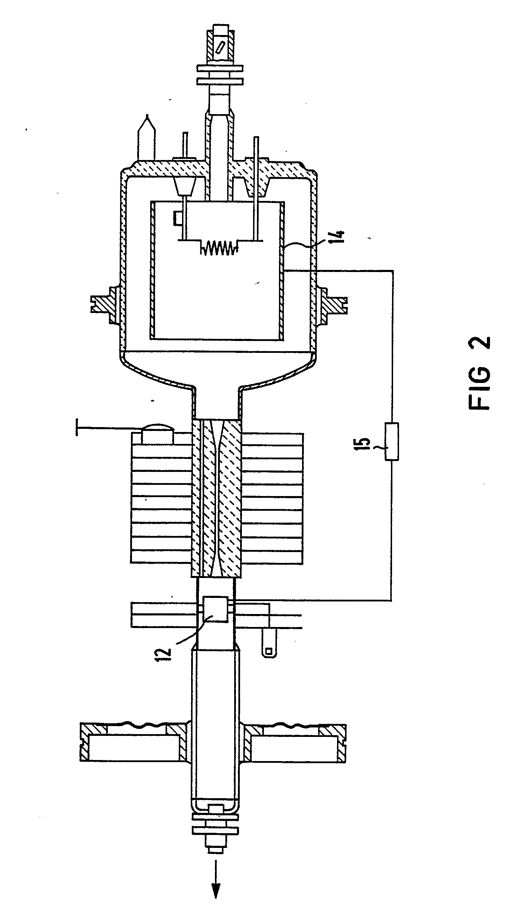

Eine vereinfachte Ausführungsform der Gaslaser-Anordnung ergibt sich gemäß Figur 2 dadurch, daß das Anodenpotential als Hilfsspannungsquelle verwendet wird, indem die Hilfselektrode 14 der Vorentladung über den Widerstand 15 mit dem metallischen Gehäuse der Anode 12 oder direkt mit der Anode 12 verbunden wird. Diese Hilfsspannungsquelle übernimmt zugleich die Funktion der Zündspannungsquelle 18 und der Betriebsspannungsquelle 16. In dieser Ausführungsform sind sowohl die besondere Betriebsspannungsquelle 16 als auch die Zündspannungsquelle 18 überflüssig.

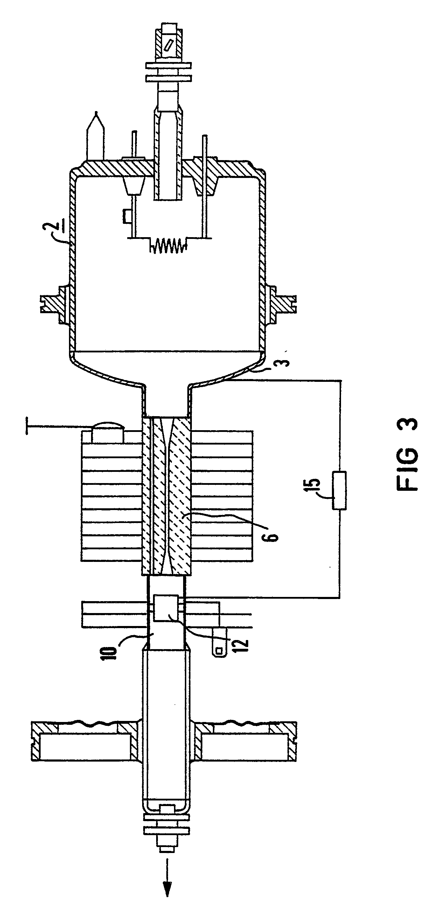

Eine weitere Vereinfachung ist möglich, wenn gemäß Figur 3 das Kathodengehäuse 2 wenigstens teilweise aus Metall besteht und dieses metallische Gehäuseteil, d.h. wenigstens der Flansch 3, über den Widerstand 15 mit dem Anodengehäuse oder der Anode 12 verbunden wird. In dieser Ausführrungsform dient der Flansch 3 als Hilfselektrode für die Vorentladung.

## Ansprüche

1. Gaslaser-Anordnung mit einer Entladungsröhre, die zwischen einer Kathode und einer Anode angeordnet ist und die mit einem Entladungskanal und wenigstens einem Gasrückführungskanal versehen ist, **dadurch gekennzeichnet,** daß der Kathode (4) eine Hilfselektrode (14) für eine Vorentladung zugeordnet ist, die über einen Widerstand (15) mit einer Betriebsspannungsquelle (16) verbunden ist (Figur 1).

2. Gaslaser-Anordnung nach Anspruch 1, **dadurch gekennzeichnet,** daß die Hilfselektrode (14) über den Widerstand (15) mit der Anode (12) verbunden ist (Figur 2).

3. Gaslaser-Anordnung nach Anspruch 1, **dadurch gekennzeichnet,** daß ein elektrisch leitender Teil des Kathodengehäuses (2) als Hilfselektrode (14) vorgesehen ist (Figur 3).

4. Gaslaser-Anordnung nach einem der Ansprüche 1 bis 3, **dadurch gekennzeichnet,** daß ein kapazitiver Widerstand vorgesehen ist.

5. Gaslaser-Anordnung nach einem der Ansprüche 1 bis 3, **dadurch gekennzeichnet,** daß ein ohmscher und ein kapazitiver Widerstand vorgesehen sind.

FIG 1

FIG 2

EP 0 309 833 A1

FIG 3

EP 0 309 833 A1

# Europäisches Patentamt

# EUROPÄISCHER RECHERCHENBERICHT

## EINSCHLÄGIGE DOKUMENTE

EP 88115225.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | <u>GB - A - 1 342 758</u> (HUGHES)<br>* Gesamt; insbesondere Fig. 1; Seite 2, Zeile 113 *<br>-- | 1-3 | H 01 S 3/03<br>H 01 J 61/02 |
| Y | <u>GB - A - 1 338 147</u> (PHILIPS)<br>* Gesamt; insbesondere Fig.; Anspruch 3 *<br>-- | 1-3 | |
| A | <u>GB - A - 1 319 917</u> (COMPAGNIE)<br>* Gesamt *<br>-- | 1 | |
| D,A | <u>US - A - 3 753 144</u> (KEARNS)<br>* Fig. 1,3 *<br>-- | 1,3 | |
| A | <u>DE - A1 - 2 856 373</u> (SIEMENS)<br>* Fig. 1,2; Seiten 8,9 *<br>-- | 1 | RECHERCHIERTE SACHGEBIETE (Int. Cl.4) |
| A | <u>DE - A1 - 3 436 145</u> (THYZEL)<br>* Fig.; Ansprüche 1,2 *<br>---- | 1 | H 01 S<br>H 01 J |

Der vorliegende Recherchenbericht wurde für alle Patentansprüche erstellt.

| Recherchenort | Abschlußdatum der Recherche | Prüfer |
|---|---|---|
| WIEN | 30-12-1988 | HEINICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82